# EUROPEAN PATENT SPECIFICATION

(11) **EP 3 426 617 B1**
(45) Date of publication and mention of the grant of the patent: **15.12.2021**
(21) Application number: 17714056.3
(22) Date of filing: 09.03.2017
(51) Int. Cl.: C03C 25/54, C04B 20/12, C04B 28/02

(54) **SILICA-COATED COMPOSITE FIBER FOR THE REINFORCEMENT OF CONCRETE**
SILICABESCHICHTETE VERBUNDFASER ZUR BEWEHRUNG VON BETON
FIBRE COMPOSITE REVÊTUE DE SILICE POUR LE RENFORCEMENT DU BÉTON

(30) Priority: 10.03.2016 US 201662306219 P
(43) Date of publication of application: 16.01.2019
(73) Proprietor: Owens Corning Intellectual Capital, LLC, Toledo, OH 43659 (US)
(72) Inventor: MOIREAU, Patrick, F-73190 Curienne (FR); ROEDERER, Francois, F-73000 Chambery (FR); VIANA, Jean-Louis, F-73800 Cruet (FR); TARDY, Gerard, F-73000 Sonnaz (FR); BLANDIN, David, 73490 La Ravoire (FR)
(74) Representative: Cabinet Beau de Loménie
(86) International application number: PCT/US2017/021476
(87) International publication number: WO 2017/156206

(56) References cited:
- CA-A- 1 230 894
- DE-A1-102005 048 190
- US-A1- 2005 202 258

## Description

### RELATED APPLICATIONS

This application claims priority to and the benefit of U.S. Provisional Patent Application Serial No. 62/306,219, filed on March 10, 2016, for SILICA-COATED COMPOSITE FIBER FOR THE REINFORCEMENT OF CONCRETE,

### FIELD OF THE DISCLOSURE

The present disclosure relates to a composition and method for making silica-coated composite fibers for the reinforcement of concrete, as well as a method of reinforcing concrete and other building materials using such fibers.

### BACKGROUND

Building materials such as concrete can be reinforced with fibers in order to overcome specific issues that can arise when using traditional reinforcement members, such as steel rebars and/or welded wire mesh. Fibers can introduce toughness (i.e., energy absorption capacity during failure) to concrete, overcoming its intrinsic brittleness and providing post-cracking strength under direct or indirect tensile stresses. The vast majority of conventional fibers used for concrete reinforcement are made out of low or high carbon content steel, or polymers such as polypropylene, polyvinyl alcohol, polyester, etc. However, these conventional fibers suffer from various limitations. Processability issues such as clustering during mixing, blockages during pumping, reduction of workability, and difficult compaction and finishing arise from the relatively high quantities required. Additionally, the cost-performance benefit of such conventional fibers is often less than that of traditional reinforcement members due to the relatively high quantities required. DE-102005048190 is directed to a concrete composite. The concrete composite includes fibers or filaments sized with a sizing agent that consists of film-forming agents, sticking agents, and surfactants. US-2005202258 is directed to a gypsum board that includes a glass fiber reinforcement with a roughened surface

### SUMMARY

Various exemplary embodiments of the present disclosure are directed to a composition and method for making composite fibers used in the reinforcement of concrete. The composite fibers disclosed herein comprise silica-coated glass fibers. The silica particles provide an improved interface between the composite fibers and the concrete matrix.

In accordance with some exemplary embodiments, composite fibers for the reinforcement of concrete are provided. The composite fibers comprise a plurality of glass fibers, wherein the glass fibers include a polymeric coating and a plurality of silica particles distributed over the surface of the glass fibers.

In accordance with some exemplary embodiments, a method of manufacturing composite fibers is provided. The method comprises providing a viscous monomeric/oligomeric coating composition, applying the viscous monomeric/oligomeric coating composition to a plurality of glass fibers to form coated fibers, applying a plurality of silica particles onto the surface of the coated fibers to form silica-coated fibers, and exposing the silica-coated fibers to either thermal energy or radiation to cure the monomeric/oligomeric coating composition and form composite fibers.

In accordance with some exemplary embodiments, a method of reinforcing concrete is provided. The method includes providing a viscous monomeric/oligomeric coating composition, applying the viscous monomeric/oligomeric coating composition to a plurality of glass fibers to form a plurality of coated fibers, applying a plurality of silica particles onto the surface of the plurality of coated fibers to form silica-coated fibers, exposing the plurality of silica-coated fibers to thermal energy or radiation to cure the monomeric/oligomeric coating composition and form a plurality of composite fibers, preparing a concrete composition, and mixing the plurality of composite fibers into the concrete composition.

### BRIEF DESCRIPTION OF THE DRAWINGS

The advantages of the inventive concepts will be apparent upon consideration of the following detailed disclosure, especially when taken in conjunction with the accompanying drawings wherein:
FIG. 1 is a diagram of a method of manufacturing composite fibers according to an exemplary embodiment disclosed herein.
FIG. 2 is an image of an exemplary composite fiber comprising glass roving impregnated with epoxy-acrylate according to the process disclosed herein.
FIG. 3 is an image of an exemplary composite fiber comprising glass roving impregnated with polyurethane-acrylate according to the process disclosed herein.
FIG. 4 is a graph showing the Flexural Tensile Strength of comparative composite-reinforced cement samples, with no silica coating.
FIG. 5 is a graph showing the Flexural Tensile Strength of composite-reinforced cement samples in accordance with the present invention, including a fine silica particle coating.
FIG. 6 is a graph showing the Flexural Tensile Strength of composite-reinforced cement samples in accordance with the present invention, including a coarse silica particle coating.

### DETAILED DESCRIPTION

Compositions and methods for making composite fibers used in the reinforcement of concrete are described in detail herein. The composite fibers comprise a plurality of silica-coated glass fibers. These and other features of the composite fibers, as well as some of the many optional variations and additions, are described in detail hereafter.

Numerical ranges as used herein are intended to include every number and subset of numbers within that range, whether specifically disclosed or not. Further, these numerical ranges should be construed as providing support for a claim directed to any number or subset of numbers in that range. For example, a disclosure of from 1 to 10 should be construed as supporting a range of from 2 to 8, from 3 to 7, from 5 to 6, from 1 to 9, from 3.6 to 4.6, from 3.5 to 9.9, and so forth.

All references to singular characteristics or limitations of the present disclosure shall include the corresponding plural characteristic or limitation, and vice versa, unless otherwise specified or clearly implied to the contrary by the context in which the reference is made.

Exemplary composite fibers used in the reinforcement of concrete are disclosed in WO-2015034805. Composite fibers in accordance with this present disclosure may include any combination or sub combination of the features disclosed by the present application and/or the foregoing PCT application.

The term "fiber" as used herein, unless otherwise specified, refers to a collection of one or more monofilaments.

The term "polymeric coating" as used herein, unless otherwise specified, refers to a mixture of monomers and/or oligomers that are hardened by one of the curing methods described or otherwise suggested herein.

The term "impregnated" as used herein, unless otherwise specified, means partially or fully impregnated.

The term "radiation cured" as used herein, unless otherwise specified, refers to monomers and/or oligomers that have been polymerized with the help of radiation, preferably in the presence of a suitable catalyst.

The term "UV cured" as used herein, unless otherwise specified, refers to the polymerization of monomers and/or oligomers in the presence of UV radiation.

The term "polymer" as used herein, unless otherwise specified, includes the term "copolymer," and, unless otherwise specified, the term "copolymer" refers to polymers made from any two or more different monomers, including, for example, terpolymers, pentapolymers, homopolymers functionalized after polymerization so that two or more different functional groups are present in the product copolymer, block copolymers, segmented copolymers, graft copolymers, and any mixture or combination thereof. The term "(co)polymer" as used herein means homopolymer or copolymer.

The term "composite fiber" as used herein, unless otherwise specified, refers to a collection of one or more fibers coated with a mixture of monomers and/or oligomers, and treated with the appropriate curing method to form a polymeric coating from the mixture of monomers and/or oligomers.

The term "equivalent diameter" as used herein, unless otherwise specified, means diameter as defined in the EN14889 Standard.

The term "concrete" as used herein, unless otherwise specified, means any type of building material containing aggregates embedded in matrix (the cement or binder) that fills the space among the aggregate particles and glues them together, e.g., Portland Cement based concrete, mineral mortar, or asphalt.

Disclosed herein are cured composite fibers coated with silica particles for the reinforcement of concrete. The exemplary composite fibers disclosed herein may be manufactured using any suitable type of fiber, such as, for example, a glass fiber. A liquid, or otherwise viscous, monomeric, or oligomeric coating composition may be prepared and applied to the surface of the glass fibers. The surface of the fibers are then further coated with particles such as silica particles. The coated fibers may then be exposed to thermal energy or radiation, such as UV radiation, which cures the coating composition to form a composite fiber.

In accordance with various exemplary embodiments, composite fibers are provided for the reinforcement of concrete. The length of the composite fibers may be any length suitable for the reinforcement of concrete, such as a length from about 10 mm to about 80 mm, from about 20 mm to about 60 mm, or from about 30 mm to about 50 mm. The equivalent diameter of the composite fibers may be from about 0.3 mm to about 2 mm, or from about 0.5 mm to about 1.3 mm. In some exemplary embodiments, the cured composite fibers have a surface roughness between 20 µm and 200 µm, as measured by microscope or SEM.

In some exemplary embodiments, the initial uncoated fibers are inorganic fibers such as glass fibers. Non-exclusive exemplary glass fibers include A-type glass fibers, C-type glass fibers, G-type glass fibers, E-type glass fibers, S-type glass fibers, Basalt fibers, E-CR-type glass fibers (e.g., Advantex^{®} glass fibers commercially available from Owens Corning), R-type glass fibers, biosoluble glass fibers, alkali-resistant glass, or combinations thereof, all of which may be suitable for use as the reinforcing fiber. In some exemplary embodiments, an alkali-resistant ("AR") glass fiber, such as Cem-FIL^{®} available from Owens Corning, is suitable for use as the reinforcing fiber.

The diameter of the monofilaments forming the glass fiber may vary from about 10 microns to about 27 microns, or from about 13 microns to about 20 microns. The tex of the fibers (the linear mass in g/km) may be from about 136 tex to about 4800 tex. In some exemplary embodiments, the tex is in the range of about 400 tex to about 1200 tex.

In some exemplary embodiments, the glass fibers disclosed herein are impregnated with a monomeric and/or oligomeric coating that leads to a polymeric coating after curing. The polymeric coating may be a thermal or radiation cured coating, such as, for example, an IR-cured coating or a UV-cured coating. A wide range of radiation may be used, *i.e.,* from UVC to visible light or high energy electron beam. UV curable monomers, oligomers, and polymers are known in the art. Particularly suitable UV curable monomers, oligomers, and polymers include acrylates, methacrylates, vinylethers, and vinyl derivatives based on polyurethane, epoxy, polyester, polyether structures with or without aliphatic, cycloaliphatic or aromatic backbones, and copolymers based on such structures. In some exemplary embodiments, the polymeric coating structure includes polyurethanes based on aromatic structure, alone or in a mixture with epoxy or polyether derivative. In some exemplary embodiments, the polymeric coating is based on epoxy-acrylate, whereas in other exemplary embodiments the polymeric coating is mainly obtained from polyurethane-acrylate.

In addition to the polymeric coating, the surface of the glass fibers disclosed herein are further coated with particles that may include, but are not limited to, silica, sand, alumina, zirconium oxide, and the like. In some exemplary embodiments, the glass fibers are further coated with silica particles. The size of the particles may vary depending on the desired final product characteristics. In some exemplary embodiments, the silica particles have a diameter of about 5 microns to about 150 microns. In some exemplary embodiments, the silica particles have a diameter of from about 20 microns to about 40 microns, or of about 20 microns. In some exemplary embodiments, the silica particles have a diameter greater than 100 microns.

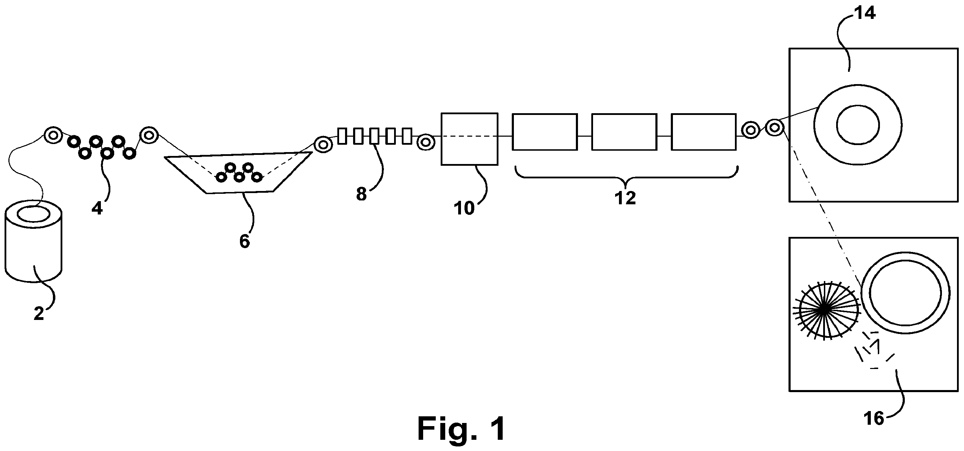

An exemplary process for producing silica-coated composite fibers is shown in FIG. 1. The process generally includes impregnating glass roving with a monomeric/oligomeric coating, further coating the surface of the glass fibers with particles such as silica particles, and curing the composite fibers using standard UV curing. The process is described in more detail below.

In accordance with the exemplary process shown in FIG. 1, a fiberglass roving 2 is passed through a bath 6 containing the monomeric/oligomeric composition to impregnate, or otherwise coat, the fiberglass roving with the curable monomeric/oligomeric coating. According to various exemplary embodiments, at least 50% of the surface of the filaments is impregnated with a monomeric/oligomeric coating. In some exemplary embodiments, up to 95% of the surface of the filaments is impregnated with the monomeric/oligomeric coating. In some exemplary embodiments, up to 100% of the surface of the filaments is impregnated with the monomeric/oligomeric coating. In some exemplary embodiments, the monomeric/oligomeric coating is applied at a temperature from about 20 °C to about 80 °C. For highly viscous coatings (over 500 mPas at 25°C), the coating is applied at a temperature between 60 °C and 80 °C to drop the viscosity range under 200 mPas and to improve impregnation speed and quality. Generally, to enhance the impregnation speed and homogeneity, the coating viscosity is maintained under 200 mPas during the impregnation step by temperature monitoring. The polymeric coating may comprise from about 5 wt% to about 50 wt% of the final composite fiber. In some exemplary embodiments, the polymeric coating is from about 10 wt% to about 30 wt% of the composite fiber.

Prior to passing through the coating bath 6, the fiberglass roving 2 may optionally pass over one or more rollers 4 or through grooves, a comb, bars, magnetic or mechanic brakes, etc., to control the tension and help guide the fiberglass roving 2 into the coating bath 6 with minimal tangling and/or winding. It should be understood that a variety of suitable structures, apparatuses, and articles could be utilized to control the tension and guide the fiberglass roving 2 into the coating bath 6, and the present disclosure is not limited to the use of rollers 4 as illustrated in FIG. 1.

In accordance with some exemplary embodiments, excess coating may be removed from the coated fiberglass through a variety of means, including, for example, passing the coated fiberglass through one or more forming dies 8, such as a wire forming die. The forming dies 8 may be tapered to progressively remove excess coating from the coated fiberglass and achieve a particular coating level. In some exemplary embodiments, the dies 8 may have a particular diameter and/or particular shape, such that the coated fiberglass exits the forming dies having the approximate diameter and shape of the final die. In one exemplary embodiment, the amount of coating on the coated fiberglass is controlled by a series of calibrated dies. For example, five dies of varying diameters may adjust the diameter of the coated fiberglass from 1.1 mm down to 0.7 mm (*i.e*., a 1.1 mm die, two 0.9 mm dies, and two 0.7 mm dies).

In accordance with the exemplary embodiment shown in FIG. 1, the coated fiberglass is passed through a fluidized bed 10 to adhere particles to the surface of the coated fiberglass. In some exemplary embodiments, the fluidized bed may comprise an airflow fluidized bed or a vibration fluidized bed. The suspended particles surround the coated fiberglass passing through the fluidized bed. The particles are adhered by the sticky monomeric/oligomeric coating on the external surface of the coated fiberglass. In exemplary lab conditions, the length of the bath is about 20 cm, with at least about 1 cm of silica particles suspended over top the running glass fiber to ensure consistent silica particle adhesion. Multiple baths may be adapted in-line depending on the needs, possibly with different types of particles. In some exemplary embodiments, the silica particles cover from about 5% to about 85%, or from about 10% to about 60%, of the surface of the composite fibers.

In accordance with the exemplary embodiment shown in FIG. 1, the silica-coated composite fiber is thereafter treated, such as by exposure to radiation, to cure the coating. The radiation source 12 may be any suitable radiation source, such as, for example, a UV lamp, LED lamp, VIS light, or electron beam (EB) radiation. In some exemplary embodiments, a plurality of UV lamps are used to cure the coating. In other exemplary embodiments, the silica-coated composite fiber may be exposed to thermal energy to cure the coating.

Though the silica particles have been described above as a secondary surface coating following the polymeric coating, the general inventive concepts disclosed herein are not limited to this embodiment. In some exemplary embodiments, the silica particles may be mixed within the monomeric/oligomeric coating, and the glass fibers may be impregnated or otherwise coated with this combined silica particle monomeric/oligomeric coating.

In some exemplary embodiments, after the curing step 12, the silica-coated composite fiber may be wound. The winder 14 may be a single winder, or may include multiple winders used in conjunction. The winder 14 may comprise any winder generally used in the art, such as an inside pull winder that is built on a rubber bladder, or an outside pull winder that is built on a cardboard core. In some exemplary embodiments, the silica-coated composite fiber may be wound at a speed from about 5 m/min to about 250 m/min to create a package having an outer diameter of up to about 1 meter.

Alternatively, the silica-coated composite fiber may be fed directly into a chopper 16 for the formation of a plurality of chopped composite strands. The chopper 16 may comprise any conventional cutting means, such as, for example, a blade cutter head that includes razor blades inserted into slots positioned at a distance corresponding to the length of a desired chopped strand. The chopped composite strands may be of any length desired for a particular application, such as, for example, from about 20 mm to about 50 mm, or from about 35 mm to about 40 mm.

In some exemplary embodiments, the silica-coated composite fiber is first wound by winder 14 and then later unwound for feeding into the chopper 16.

In some exemplary embodiments, the chopped composite strands disclosed herein may be used to reinforce concrete. The reinforced concrete may be formed by preparing a concrete (e.g., using a conventional method of forming concrete) followed by mixing the chopped composite strands into the concrete, thereby forming a composite fiber reinforced concrete. In some exemplary embodiments, the quantity of silica-coated composite fibers in the reinforced concrete is from about 2 kg to about 75 kg of composite fiber per cubic meter of concrete, or from about 5 kg to about 25 kg of composite fiber per cubic meter of concrete. In some exemplary embodiments, the quantity of silica-coated composite fibers in the reinforced concrete is from about 7.5 kg to about 12.5 kg of composite fiber per cubic meter of concrete.

In some exemplary embodiments, the silica-coated composite fibers disclosed herein are provided for the reinforcement of shotcrete, *i.e*., concrete that is projected against a wall at a high speed and pressure. Existing composite fibers used as reinforcement in conventional concrete may exhibit an undesirable "rebound effect" when used in shotcrete applications. The fiber lengths of existing composite fibers (from about 2.5 cm to about 4 cm) may contribute to this effect of the concrete rebounding from the wall against which it was projected.

The rebound effect causes a reduction in the level of concrete reinforcement that conventional composite fibers provide in shotcrete applications. This is because during the projection of the shotcrete, the reinforcement fibers hit the wall at a high speed (several meters per second). The conventional composite fibers are quite flexible, and essentially act as "springs" when they hit the wall. Because the surface of the conventional fibers is smooth, the rebound effect extracts the fibers from the concrete. The quantity of fibers lost by this effect is dependent on the projection speed, but may be up to 60%.

In contrast, the silica-coated composite fibers disclosed herein provide a surface which anchors the composite fibers in the projected cement, and avoids or lessens the undesirable rebound effect. To overcome the rebound effect in conventional applications, an increased amount of composite fibers must be used to achieve the desired mechanical properties in the reinforced concrete. However, the surface roughness provided by the silica particles coating the composite fibers disclosed herein overcomes or otherwise reduces this rebounding effect, and achieves the desired mechanical properties without necessitating a substantial increase in the number of composite fibers used.

In addition to improvements in overcoming the "rebound effect" in fresh cement, the silica particle coating on the composite fibers disclosed herein improves the adhesion between the concrete matrix and the composite fibers after the cement has dried. In some exemplary embodiments, the silica coating improves the adhesion between the concrete matrix and the composite fibers by at least 2 to 3 times that of otherwise identical composite fibers not coated with silica particles.

Other advantages of the composite fibers described herein include a high speed of dispersion during the mixing process, ease in achieving a uniform distribution of fibers in the concrete mass, reduced wearing of mixing and pumping systems, less risk of clogging pumping pipes and blockages when filling structural elements, and less risk of honeycombs and consequent durability issues when used in combination with conventional reinforcement. For example, steel fibers are made in a shape with a "hook" at each end to give a mechanical anchoring in the cement or concrete. That may generate problems that can be described as "urchin" like clusters, which can induce pump breaks and inhomogeneity of the reinforced concrete. With the silica coated fiberglass disclosed herein, it is possible to achieve similar mechanical properties without the above-described drawbacks of conventional systems.

In some exemplary embodiments, the composite fibers are corrosion resistant, and thus do not develop corrosion stains in case of exposed concrete surfaces. Additionally, the composite fibers make the hardened concrete easier to recycle than traditional steel fibers.

The general inventive concepts have been described above both generally and with regard to various specific exemplary embodiments. Although the general inventive concepts have been set forth in what are believed to be exemplary illustrative embodiments, a wide variety of alternatives will be apparent to those of skill in the art from reading this disclosure. The general inventive concepts are not otherwise limited, except for those instances when presented in specific claims. Additionally, the following examples are meant to better illustrate the present invention, but do not limit the general inventive concepts.

### EXAMPLES

The following examples describe the performance of various exemplary embodiments of the silica-coated composite fibers of the present disclosure, as used for concrete reinforcement.

### Example 1

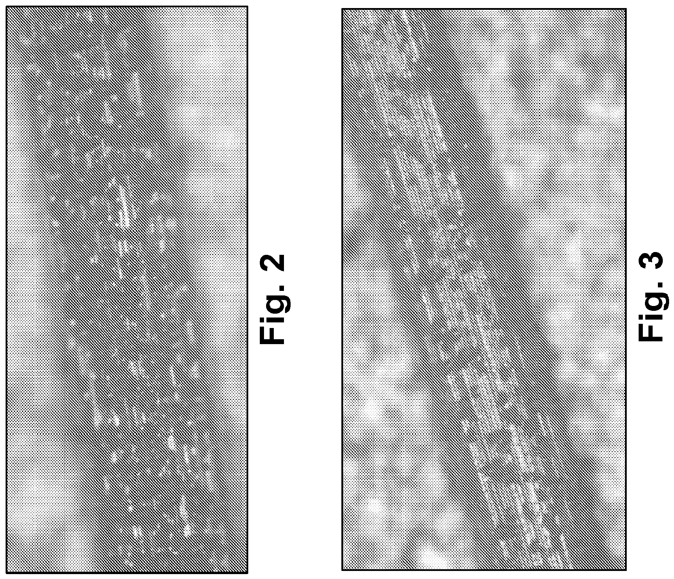

Figures 2 and 3 are images of exemplary silica-coated composite fibers. In accordance with the exemplary process disclosed herein, the composite fiber of Figure 2 was formed from glass roving impregnated with epoxy-acrylate. The composite fiber of Figure 3 was formed from glass roving impregnated with polyurethane-acrylate.

The composite fibers were prepared with Cemfil^{®} glass fibers available from Owens Corning. The exemplary AR glass fibers were 640 tex, 19 µm, with epoxy-based sizing. The coated fibers of both Figures 2 and 3 were adjusted to an equivalent diameter of 0.7 mm using a series of calibration dies (1.1 mm, then 0.9 mm, then a second 0.9 mm, and finally 0.7 mm). Silica particles were deposited onto the wet surface of the glass fibers using an airflow fluidized bed. Thereafter, the composite fibers were cured using UV radiation.

Figure 2 shows an equal, highly loaded distribution of silica particles over the surface of the composite rod. Figure 3 shows an equal distribution, but of a lower amount of silica particles as compared to Figure 2.

### Example 2

The adhesion behavior of exemplary composite fibers were measured using the Pull Out Test on fresh cement. To conduct the Pull Out Test (Fresh Cement), a 1L composite fiber-reinforced sample of fresh cement was prepared for each formulation, with a cement resistance Rc of 80 MPa. A 22 cm rod was prepared, and 15 cm of the rod was inserted vertically into each sample. The samples were thereafter evaluated for extraction strength, by extracting the rod after 10 minutes maturation of the cement, so that the cement sample was stabilized, but not solidified. The rod was extracted at a speed of 60 mm/mn, with the observed extraction strengths summarized in Table 1 below.

**Table 1: Extraction Strength Evaluated By The Pull Out Test**

| | **HDF Samples*** | **Max Strength (MPa)** | | **Distance at Max strength (mm)** | |
|---|---|---|---|---|---|
| | | **Average** | **Std. Deviation** | **Average** | **Std. Deviation** |
| | Comparative HDF 100 (without silica) | 3.1 | 0.9 | 0.57 | 0.10 |
| | Exemplary HDF 101 (with silica) | 10.0 | 4.6 | 1.11 | 0.22 |

| | | | | | |
|---|---|---|---|---|---|
| | | **Extraction Length** | | | |
| | | 4 mm | 9 mm | 15 mm | 22 mm |
| **Residual Extraction Strength (MPa)** | Comparative HDF 100 (without silica) | 2.0 | 1.9 | 1.9 | 1.9 |
| | Exemplary HDF 101 (with silica) | 5.8 | 4.8 | 4.0 | 3.9 |

| | | | | | |
|---|---|---|---|---|---|
| *Five specimens of each Comparative and Exemplary sample were evaluated, with the averages reported in Table 1. | | | | | |

The results of the Pull Out Test show that the adhesion of the composite fibers with fresh cement (both at max strength and during extraction) is significantly higher for the exemplary product with silica particles (HDF 101) as compared to the product without silica particles (HDF 100). This increased adhesion with the cement leads to a lower loss of fibers during reinforced concrete projection.

### Example 3

Table 2 below lists various exemplary composite fiber compositions and resulting properties. Three exemplary cement batches were evaluated to determine the effects that modifying the surface roughness had on mechanical performance after hardening of the cement.

As shown in the data below, the mechanical performance of the silica-coated composite fiber reinforced concrete after hardening was substantially higher than the non-silica coated comparative samples.

**Table 2: Exemplary Composite Fiber Compositions**

| HDF Sample Number | Formulation | Bath temperature | Silica particle (distribution range) | Line speed | Pull Out Test 7d Seven days Mean (standard deviation) | Pull out 7 days relative improvement (no treatment=100) |
|---|---|---|---|---|---|---|
| Comparative 36 | F010 (Polyurethane - based coating) | 50°C | None | 14 m/mn | 170 N (28) | 100 |
| 42 | F010 | 50°C | silica 5-105µm | 14 m/mn | 306 N (37) | 180 |
| Comparative 46 | F010 | 50°C | None | 20-45 m/min | 109 N (42) | 100 |
| 43 | F010 | 50°C | silica 20-40µm | 20-45 m/min | 220 N (39) | 200 |
| 44 | F010 | 50°C | silica 6-35µm | 20-45 m/min | 200 N (40) | 183 |
| 45 | F010 | 50°C | silica <8µm | 20-45 m/min | 250 N (28) | 230 |
| Comparative 100 | F010 | 50°C | None | 20 m/min | 264 N (69) | 100 |
| 101 | F010 | 50°C | silica 20-40µm | 20 m/min | 460 N(45) | 174 |
| 102 | F010 | 50°C | silica 20-40µm | 50 m/min | 512 N (18) Limit of tensile strength of rod | 194 |

Samples 36 and 42 from Table 2 were further evaluated at 21 days. Table 3 shows the positive impact on bonding between fibers and concrete increased as the concrete cured.

**Table 3: Adhesion after 7 Days and 21 Days**

| HDF | Description | Pull Out Test 7d | | Pull Out Test 21d | |
|---|---|---|---|---|---|
| Comparative 36 | F010, High tension, T = 50°C, flat surface | 170 N (28) | 100% | 103 N (23) | 100% |
| 42 | F010, High tension, T = 50°C, surface with silica | 306 N (37) | 180% | 382N (29) | 370% |

### Example 4

In order to confirm the stronger bonding observed in Example 3, two concrete batches (C30-37 according to EN 206) were mixed with either 10 kg of the composite fibers disclosed herein, or with 10 kg of conventional glass fibers having a smooth surface. After 28 days curing at 23°C and 90% moisture, the specimens were 3 point bended according to the EN Standard 14651.

Table 4 shows the improved performance of the silica-coated composite fibers, as measured by the Pull Out Test described above:

**Table 4: Adhesion after 28 Days**

| HDF Sample | Formulation | Bath temperature | Silica particles diameter | Line speed | Pull out test | Relative increase |
|---|---|---|---|---|---|---|
| HDF 109 comparative | F 35 | 60°C | None | 50m/mn | 165 N (21) | 100 |
| HDF 110 | F 35 | 60°C | 20-40 µm | 50m/mn | 488 N (16) | 295 |
| HDF 117 | F 52 | 50°C | 20-40 µm | 50m/mn | 532 N (25) | 324 |

### Example 5

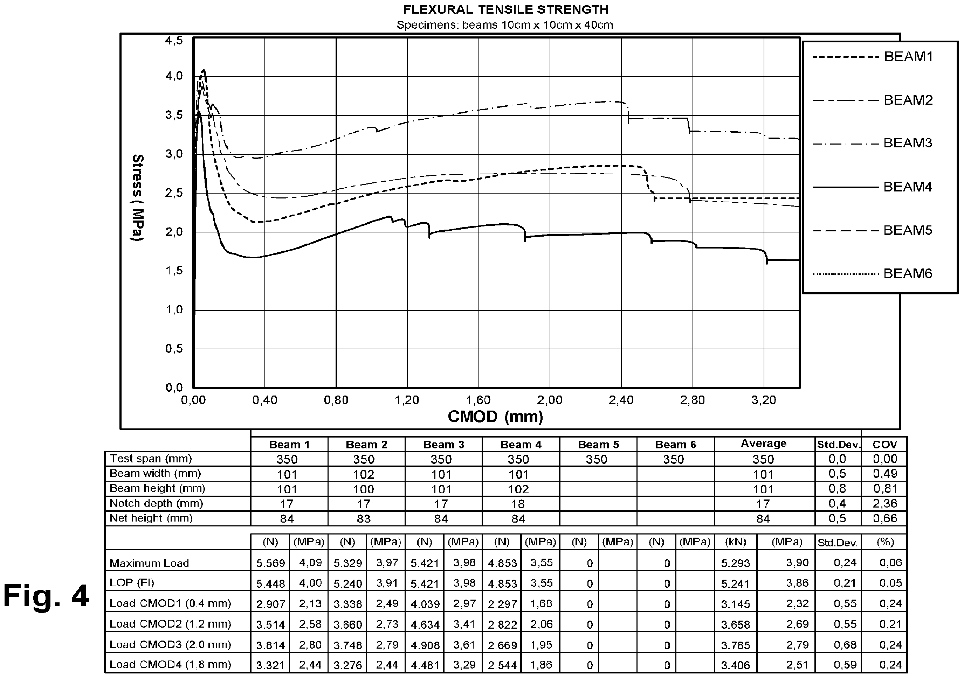

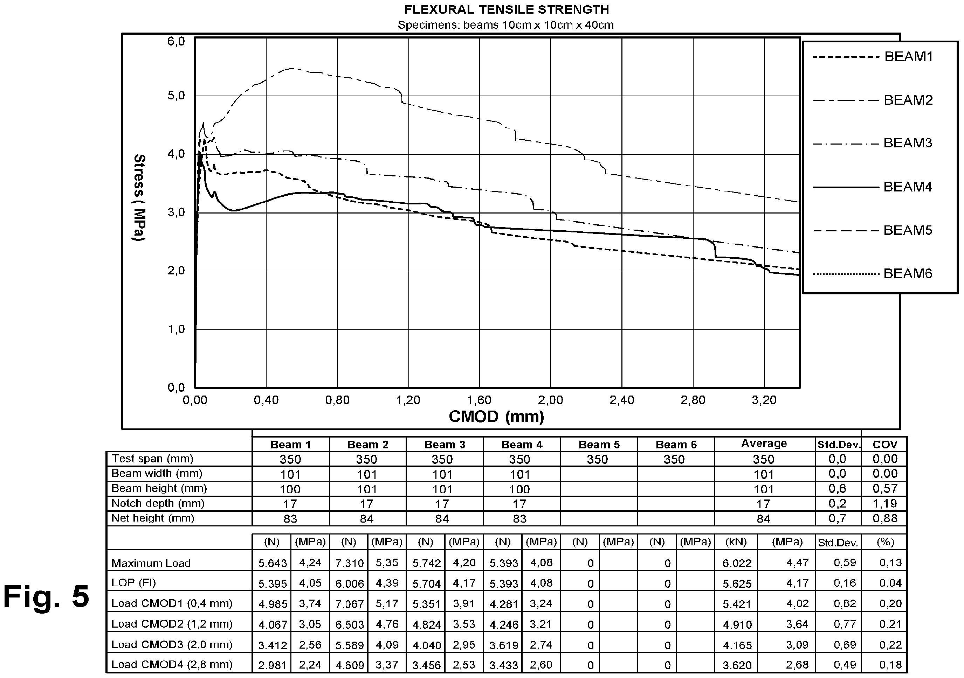

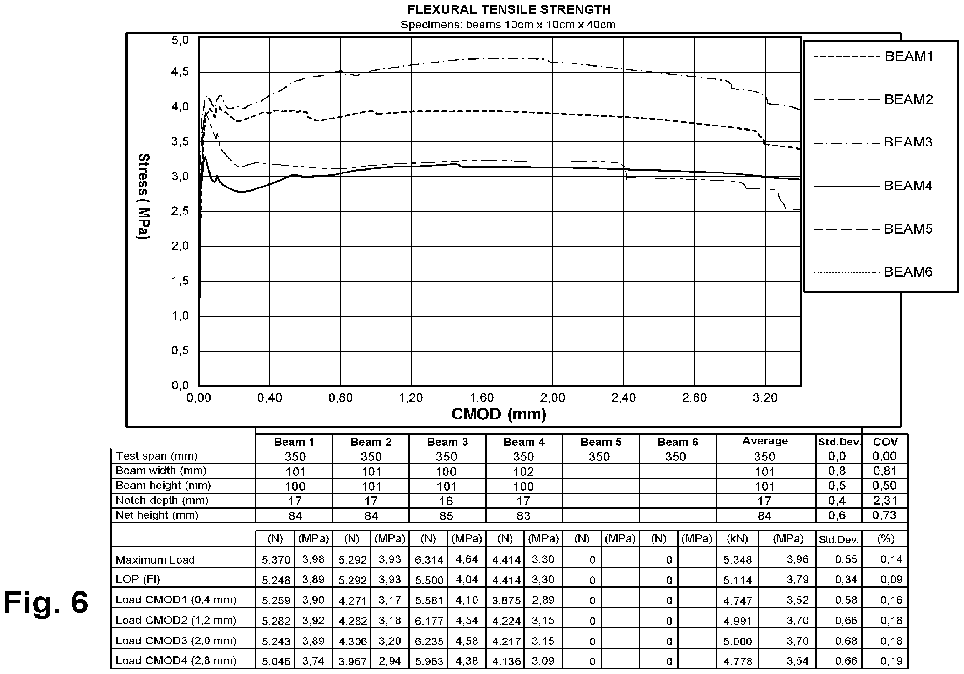

In a fifth trial, two composite fiber-reinforced concrete batches were prepared according to the process disclosed herein and compared with a conventional, uncoated composite fiber-reinforced concrete batch. The composite fibers had a length of 40 mm, an aspect ratio of 70, and were dosed at 10 kg/m3 fiber in concrete (C30-37), having consistency S4. Specimen beams having dimensions of 10 cm x 10 cm x 40 cm were prepared and evaluated for flexural tensile strength according to EN 14651 standards. The samples were cured for 7 days prior to evaluation at 23°C and 90% moisture. Figures 4-6 show the results of each beam's Flexural Tensile Strength. In parallel, three additional 10x10x10 cm specimens were cast and tested for compressive strength according to EN12390.

EN 14651 Flexural Strength data was used to evaluate the Average Residual Strength (ARS). The ARS is the mean value of individual strengths at 0.4, 1.2, 2.0 and 2.8 mm of crack width opening (noted respectively called CMOD1, CMOD2, CMOD3, CMOD4). The ARS value shows the residual strength observed after a sample breaks, i.e., a residual "wrenching" strength required to pull out the embedded glass fibers from the matrix. The ARS value is applicable to evaluating industrial applications, for example the behavior of a material during an earthquake. As shown in Table 5, each exemplary batch showed an improved Average Residual Strength (measured in MPa) as compared to a conventional, non-silica coated composite fiber.

**Table 5: Average Residual Strength**

| HDF Sample | Silica particles diameter | Compressive strength (MPa) | Fc (MPa) | Maximum Flexural Strength (MPa) | CMOD1 (MPa) | CMOD4 (MPa) | ARS (MPa) |
|---|---|---|---|---|---|---|---|
| HDF 130 Comparative | No Silica | 39.38 | 31.0 | 3.98 | 2.32 | 2.51 | 2.58 |
| | | 38.00 | | | | | |
| HDF 131 | 20-40 µm | 38.88 | 30.8 | 4.47 | 4.02 | 2.68 | 3.36 |
| | | 38.20 | | | | | |
| HDF 132 | >100 µm | 39.48 | 31.9 | 3.96 | 3.52 | 3.54 | 3.61 |
| | | 40.30 | | | | | |

As used in the description of the invention and the appended claims, the singular forms "a," "an," and "the" are intended to include the plural forms as well, unless the context clearly indicates otherwise. To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (*e.g*., A or B) it is intended to mean "A or B or both." When the applicants intend to indicate "only A or B but not both" then the term "only A or B but not both" will be employed. Thus, use of the term "or" herein is the inclusive, and not the exclusive use. Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

## Claims

1. A composite fiber for the reinforcement of concrete, the composite fiber comprising:
a plurality of glass fibers, wherein the plurality of glass fibers includes a monomeric/oligomeric coating to form coated fibers; and
a plurality of silica particles distributed over the surface of the coated fibers.

2. The composite fiber of claim 1, wherein the monomeric/oligomeric coating is curable by thermal energy or UV radiation.

3. The composite fiber of claim 1, wherein the glass fibers are alkali-resistant glass fibers.

4. The composite fiber of claim 1, wherein the monomeric/oligomeric coating comprises epoxy-acrylate.

5. The composite fiber of claim 1, wherein the composite fiber has a length from 20 mm to 60 mm.

6. The composite fiber of claim 1, wherein the composite fiber has a surface roughness between 20 µm and 200 µm.

7. The composite fiber of claim 1, wherein the plurality of silica particles are distributed over between about 5% and about 85% of the surface of the coated fibers.

8. A method of manufacturing a composite fiber, the method comprising:
providing a viscous monomeric/oligomeric coating composition;
applying the viscous monomeric/oligomeric coating composition to a plurality of glass fibers to form coated fibers;
applying a plurality of silica particles onto the surface of the coated fibers to form silica-coated fibers; and
exposing the silica-coated fibers to thermal energy or radiation to cure the monomeric/oligomeric coating composition and form the composite fiber.

9. The method of claim 8, wherein the silica-coated fibers are cured by UV radiation.

10. A method of reinforcing concrete, the method comprising:
providing a viscous monomeric/oligomeric coating composition;
applying the viscous monomeric/oligomeric coating composition to a plurality of glass fibers to form a plurality of coated fibers;
applying a plurality of silica particles onto the surface of the plurality of coated fibers to form silica-coated fibers;
preparing a concrete composition; and
mixing the silica-coated fibers into the concrete composition.

11. The method of claim 10, further comprising a step of exposing the plurality of silica-coated fibers to thermal energy or radiation.

12. The method of claim 11, comprising exposing the plurality of silica-coated fibers to UV radiation.

13. The method of claim 11, further comprising a step of curing the monomeric/oligomeric coating composition to form a plurality of composite fibers.

14. The method of claim 10, wherein the reinforced concrete comprises shotcrete.

15. The method of claim 13, wherein said composite fibers have a length from 20 mm to 60 mm.

## Patentansprüche

1. Verbundfaser zur Bewehrung von Beton, wobei die Verbundfaser umfasst:
mehrere Glasfasern, wobei die mehreren Glasfasern eine monomere/oligomere Beschichtung aufweisen, um beschichtete Fasern zu bilden, und
mehrere Siliziumdioxidteilchen, die über die Oberfläche der beschichteten Fasern verteilt sind.

2. Verbundfaser nach Anspruch 1, wobei die monomere/oligomere Beschichtung durch thermische Energie oder UV-Strahlung härtbar ist.

3. Verbundfaser nach Anspruch 1, wobei die Glasfasern alkalibeständige Glasfasern sind.

4. Verbundfaser nach Anspruch 1, wobei die monomere/oligomere Beschichtung Epoxyacrylat umfasst.

5. Verbundfaser nach Anspruch 1, wobei die Verbundfaser eine Länge von 20 mm bis 60 mm aufweist.

6. Verbundfaser nach Anspruch 1, wobei die Verbundfaser eine Oberflächenrauigkeit zwischen 20 µm und 200 µm aufweist.

7. Verbundfaser nach Anspruch 1, wobei die mehreren Siliziumdioxidteilchen auf zwischen etwa 5 % und etwa 85 % der Oberfläche der beschichteten Fasern verteilt sind.

8. Verfahren zur Herstellung einer Verbundfaser, wobei das Verfahren umfasst:
Bereitstellen einer viskosen monomeren/oligomeren Beschichtungszusammensetzung,
Aufbringen der viskosen monomeren/oligomeren Beschichtungszusammensetzung auf mehrere Glasfasern, um beschichtete Fasern zu bilden,
Aufbringen mehrerer Siliziumdioxidteilchen auf die Oberfläche der beschichteten Fasern, um mit Siliziumdioxid beschichtete Fasern zu bilden, und
Aussetzen der mit Siliziumdioxid beschichteten Fasern thermischer Energie oder Strahlung, um die monomere/oligomere Beschichtungszusammensetzung zu härten und die Verbundfaser zu bilden.

9. Verfahren nach Anspruch 8, wobei die mit Siliziumdioxid beschichteten Fasern durch UV-Strahlung gehärtet werden.

10. Verfahren zum Bewehren von Beton, wobei das Verfahren umfasst:
Bereitstellen einer viskosen monomeren/oligomeren Beschichtungszusammensetzung,
Aufbringen der viskosen monomeren/oligomeren Beschichtungszusammensetzung auf mehrere Glasfasern, um mehrere beschichtete Fasern zu bilden,
Aufbringen mehrerer Siliziumdioxidteilchen auf die Oberfläche der mehreren beschichteten Fasern, um mit Siliziumdioxid beschichtete Fasern zu bilden,
Herstellen einer Betonzusammensetzung, und
Mischen der mit Siliziumdioxid beschichteten Fasern in die Betonzusammensetzung.

11. Verfahren nach Anspruch 10, ferner umfassend einen Schritt des Aussetzens der mehreren mit Siliziumdioxid beschichteten Fasern thermischer Energie oder Strahlung.

12. Verfahren nach Anspruch 11, umfassend das Aussetzen der mehreren mit Siliziumdioxid beschichteten Fasern UV-Strahlung.

13. Verfahren nach Anspruch 11, ferner umfassend einen Schritt des Härtens der monomeren/oligomeren Beschichtungszusammensetzung, um mehrere Verbundfasern zu bilden.

14. Verfahren nach Anspruch 10, wobei der bewehrte Beton Spritzbeton umfasst.

15. Verfahren nach Anspruch 13, wobei die Verbundfasern eine Länge von 20 mm bis 60 mm aufweisen.

## Revendications

1. Fibre composite pour le renforcement du béton, la fibre composite comprenant :
une pluralité de fibres de verre, où la pluralité de fibres de verre comprend un revêtement monomérique/oligomérique pour former des fibres revêtues ; et
une pluralité de particules de silice réparties sur la surface des fibres revêtues.

2. Fibre composite selon la revendication 1, dans laquelle le revêtement monomérique/oligomérique est durcissable par énergie thermique ou par rayonnement UV.

3. Fibre composite selon la revendication 1, dans laquelle les fibres de verre sont des fibres de verre résistantes aux alcalis.

4. Fibre composite selon la revendication 1, dans laquelle le revêtement monomérique/oligomérique comprend un époxy-acrylate.

5. Fibre composite selon la revendication 1, dans laquelle la fibre composite a une longueur de 20 mm à 60 mm.

6. Fibre composite selon la revendication 1, dans laquelle la fibre composite a une rugosité de surface comprise entre 20 µm et 200 µm.

7. Fibre composite selon la revendication 1, dans laquelle la pluralité de particules de silice est répartie sur environ 5% à environ 85% de la surface des fibres revêtues.

8. Procédé de fabrication d'une fibre composite, la méthode comprenant :
fournir une composition de revêtement monomérique/oligomérique visqueuse ;
appliquer la composition de revêtement monomérique/oligomérique visqueuse à une pluralité de fibres de verre pour former des fibres revêtues ;
appliquer une pluralité de particules de silice sur la surface des fibres revêtues pour former des fibres revêtues de silice ; et
exposer les fibres revêtues de silice à une énergie thermique ou à un rayonnement pour durcir la composition de revêtement monomérique/oligomérique et former la fibre composite.

9. Procédé selon la revendication 8, dans lequel les fibres revêtues de silice sont durcies par un rayonnement UV.

10. Procédé de renforcement du béton, la méthode comprenant :
fournir une composition de revêtement monomérique/oligomérique visqueuse ;
appliquer la composition de revêtement monomérique/oligomérique visqueuse à une pluralité de fibres de verre pour former une pluralité de fibres revêtues ;
appliquer une pluralité de particules de silice sur la surface de la pluralité de fibres revêtues pour former des fibres revêtues de silice ;
préparer une composition de béton ; et
mélanger les fibres revêtues de silice dans la composition de béton.

11. Procédé selon la revendication 10, comprenant en outre une étape d'exposition de la pluralité de fibres revêtues de silice à une énergie thermique ou à un rayonnement.

12. Procédé selon la revendication 11, comprenant l'exposition de la pluralité de fibres revêtues de silice à un rayonnement UV.

13. Procédé selon la revendication 11, comprenant en outre une étape de durcissement de la composition de revêtement monomérique/oligomérique pour former une pluralité de fibres composites.

14. Procédé selon la revendication 10, dans lequel le béton armé comprend du béton projeté.

15. Procédé selon la revendication 13, dans lequel lesdites fibres composites ont une longueur de 20 mm à 60 mm.
